Europäisches Patentamt

European Patent Office

Office européen des brevets

(11) Veröffentlichungsnummer : **0 305 582 B1**

(12) **EUROPÄISCHE PATENTSCHRIFT**

(45) Veröffentlichungstag der Patentschrift :
05.06.91 Patentblatt 91/23

(51) Int. Cl.⁵ : **F16D 13/64**, F16D 69/00

(21) Anmeldenummer : 87112964.9

(22) Anmeldetag : 04.09.87

(54) **Verfahren zur Herstellung von Reiblamellen.**

(43) Veröffentlichungstag der Anmeldung :
08.03.89 Patentblatt 89/10

(45) Bekanntmachung des Hinweises auf die
Patenterteilung :
05.06.91 Patentblatt 91/23

(84) Benannte Vertragsstaaten :
DE ES FR GB IT

(56) Entgegenhaltungen :
EP-A- 0 128 758
DE-B- 1 296 379
DE-B- 1 575 906
DE-B- 2 340 464
FR-A- 1 340 291
FR-A- 1 527 763
GB-A- 667 827

(73) Patentinhaber : **Borg-Warner Automotive
GmbH
Kurpfalzring
W-6900 Heidelberg 1 (DE)**

(72) Erfinder : **Bauer, Walter
Finkenweg 25
W-6901 Eppelheim (DE)**

(74) Vertreter : **Meyer-Roedern, Giso, Dr. et al
Bergheimer Strasse 10-12
W-6900 Heidelberg 1 (DE)**

EP 0 305 582 B1

**Beschreibung**

Die Erfindung betrifft ein Verfahren zur Herstellung von Reiblamellen für Kupplungen, Bremsen und andere Aggregate mit einer Trägerlamelle und einem darauf aufgebrachten Reibbelag aus papierartigem Material mit Nuten für die Ölführung, wobei die Nuten bis auf die Trägerlamelle reichende Durchbrüche in dem Reibbelagmaterial sind.

Seit längerem bekannt sind Reiblamellen mit einer Trägerlamelle aus Stahl und einem Reibbelag aus einer papierartigen Folie mit unterschiedlicher Zusammensetzung, vorwiegend aus Zellulose und Kunststoff-Fasern, die mit Füllmaterial aufgefüllt sind. Vor dem Aufbringen auf das Trägerblech wird das Reibmaterial mit einem harzartigen Polymer getränkt, das unter hohen Temperaturen ausgehärtet wird.

Für die Herstellung der Nuten für die Ölführung werden üblicherweise zwei Verfahren angewendet. Entweder wird der Reibbelag auf die Trägerlamelle aufgepresst und danach die Nuten in den Reibbelag eingefräst, oder während des Aufpressvorgangs werden die Nuten über einen entsprechend geformten Preßstempel in den Reibbelag eingepreßt. Beim erstgenannten Verfahren werden gute Abstreifkanten an den Nuträndern für das Abstreifen des Öls erreicht. Andererseits aber unterliegen die scharfen Kanten leicht einer Beschädigung während des Fräsvorganges und auch im späteren Betrieb. Das zweitgenannte Verfahren hat den Vorteil, daß die Nutränder wesentlich stabiler gegenüber Ausbrechungen sind, jedoch haben sie nicht den gewünschten hohen Abstreifeffekt, da sie an ihren Rändern eine leichte Rundung haben.

Um für den Schaltvorgang einer Kupplung einen möglichst hohen Anfangsreibwert zu erhalten, der unverändert während des Schließvorganges der Kupplung beibehalten wird, wobei gleichzeitig die Kupplung so ausgelegt ist, daß sich im geöffneten Zustand der Kupplung geringe Schleppverluste einstellen, sind besondere Anstrengungen bei der Herstellung der Kupplung und der Nutausbildung erforderlich. Außerdem besteht sehr häufig die Notwendigkeit, daß im geschlossenen Zustand der Kupplung eine möglichst große Kühlölmenge durchgeschleust wird, während im geöffneten Zustand eine verstärkte Ölverwirbelung für zusätzliche Kühlung sorgen soll. Es zeigt sich, daß eine Kombination der gewünschten Eigenschaften hohe Anforderungen an eine Kupplung stellt, die nicht in jedem Fall durch gefräste oder gepreßte Nuten erreichbar sind.

Der Erfindung lag deshalb die Aufgabe zugrunde, eine Reiblamelle zu schaffen, welche den gestellten Anforderungen Rechnung trägt.

Aus der EP-A-0 128 758 und der DE-B-2 340 464 sind Reiblamellen bekannt, bei denen der Reibbelag segmentweise auf die Trägerlamelle aufgebracht wird, so daß Lücken zwischen den Reibbelagsegmenten verbleiben und bis auf die Trägerlamelle durchgehende Nuten bilden. Die einzelne Herstellung und separate Aufbringung mehrerer Reibbelagsegmente ist nicht zuletzt wegen der dabei erforderlichen Präzision sehr aufwendig, insbesondere wenn eine größere Zahl von Nuten realisiert werden soll.

Aufgabe der Erfindung ist es, ein herstellungstechnisch unaufwendiges Verfahren der eingangs genannten Art anzugeben, mit dem eine beliebige Anzahl durchgehender Nuten in einer mit hoher Präzision eingehaltenen Konfiguration in dem Reibbelag ausgebildet werden kann.

Diese Aufgabe wird mit einem Verfahren der genannten Art dadurch gelöst, daß vor dem Aufbringen des Reibbelags auf die Trägerlamelle die Nuten aus dem Reibbelag ausgeformt werden, wobei die Nuten an wenigstens einem Ende geschlossen sind, der Reibbelag zusammenhängendes Teil auf die Trägerlamelle aufgebracht wird, und offene Enden der Nuten durch Entfernen von diese verschließendem Reibbelagmaterial gebildet werden.

Das Ausformen der Nuten kann spanlos oder spangebend erfolgen. Insbesondere kommt ein Formen der Nuten durch Ausstanzen in Betracht.

Es zeigt sich, daß durch Ausstanzen eine besonders gute Scharfkantigkeit der Nutränder erreicht werden kann. Auf diese Weise können sehr scharfkantige Nuten mit maximaler Tiefe erzielt werden. Die schaftkantigen Nuten ergeben ein schnelleres Abstreifen des Öls mit gleichzeitig sehr hohem Anfagsreibwert. Darüber hinaus haben die gestanzten Nuten in Folge auch ein größeres Nutvolumen und ermöglichen dadurch eine bessere Wärmeabfuhr bei gleicher Belagstärke. Die durch das Ausstanzen erreichte größere Nuttiefe ergibt einen stärkeren Öldurchfluß, der eine bessere Kühlung zur Folge hat, was schließlich eine längere Lebensdauer des Belags ergibt. Im Umkehrschluß hierzu ist bei gleicher Lebensdauer der Einsatz dünnerer Beläge möglich. Die Isolationswirkung des Reibbelags im Nutbereich fällt weg und es tritt eine verstärkte Wärmeabfuhr auf.

Das Ausformen der Nuten erfolgt vorzugsweise vor einem Imprägnieren des Reibbelags mit Tränkharz. Das ist von besonderer Bedeutung, um ein Ummanteln der Schnittfläche mit Tränkharz zu erreichen. Eine Lamelle mit auf diese Weise hergestellten Nutkanten zeigt eine besonders hohe Lebensdauer. Der Reibbelag ist mit der entsprechenden Polymermischung zu imprägnieren und auszuhärten, nachdem die Entnahme des Reibbelagmaterials durchgeführt wurde.

Die offenen Enden der Nuten können durch Entfernen eines insbesondere über die Trägerlamelle hinausstehenden Reibbelagrands gebildet werden. Durch einseitiges Entfernen eines Reibbelagrandes erhält man mit einem Ende offene Nuten.

Mit beiden Enden offene Nuten können durch einseitiges oder beidseitiges Entfernen von Reibbelagrändern gebildet werden.

Die Anordnung der Nuten kann an die jeweils gestellten Bedürfnisse angepaßt werden, um einen besonders gewünschten Reibwertverlauf zu erreichen. Damit können die Nuten in bekannter Weise mit einem oder mit beiden Enden offen sein. Bei außen geschlossenen Nuten fließt das Öl langsamer ab, so daß der äußere Belagbereich nicht so schnell trocken wird. Der Reibwertanstieg ist langsamer. Das Öl wird bei geschlossener Kupplung gestaut und erzeugt einen Öldruck in axialer Richtung, was den Trennvorgang beim Öffnen der Kupplung fördert und zu reduzierten Schleppverlusten führt.

An den zwischen den Nuten stehenbleibenden Stegen des Reibbelags am Übergang zu dem Reibbelagrand bzw. den Reibbelagrändern können Sollbruchstellen ausgebildet sein und die Reibbelagränder an den Sollbruchstellen abgetrennt werden.

Das Verfahren erlaubt die Herstellung beliebiger Nutkonfigurationen, unabhängig von der Lamellenträgerkonfiguration, um dadurch die gewünschte Flußrichtung für das Öl zu erreichen.

Anhand zweier Ausführungsbeispiele wird die Erfindung näher erläutert.

Es zeigen

Fig. 1 eine Reiblamelle mit einem geschlossenen Nutauslauf,

Fig. 2 eine Reiblamelle mit durchgehenden Nuten, die an beiden Enden offen sind,

Fig. 3 den Reibbelag für die Lamelle gemäß Fig. 2 vor dem Aufbringen nach dem Ausformvorgang.

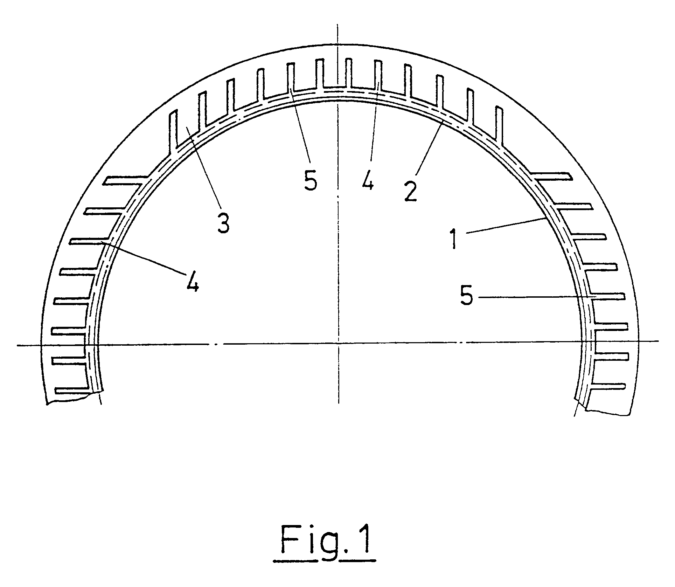

Die Reiblamelle nach der Fig. 1 besteht im wesentlichen aus der Trägerlamelle 1 mit innenliegendem Zahnkranz 2 und dem Reibbelag 3. Der Reibbelag 3 weist die nicht durchgehenden Nuten 4 auf, an deren Stellen die Reibbelaganteile vollständig entfernt worden sind. Die Nuten 4 sind an ihren nach innen weisenden Enden 5 offen.

Eine besonders gute Verwirbelung des Öls wird beim Einsatz der Reiblamelle in einem Wandler erreicht, wenn die Nuten an ihren nach außen weisenden Enden offen und an den inneren Enden geschlossen sind. Dann bildet der innere, nicht genutete Teil des Reibbelags eine Abdichtung. Dies verursacht turbulente Strömungen und die Wärme wird schneller abgeleitet.

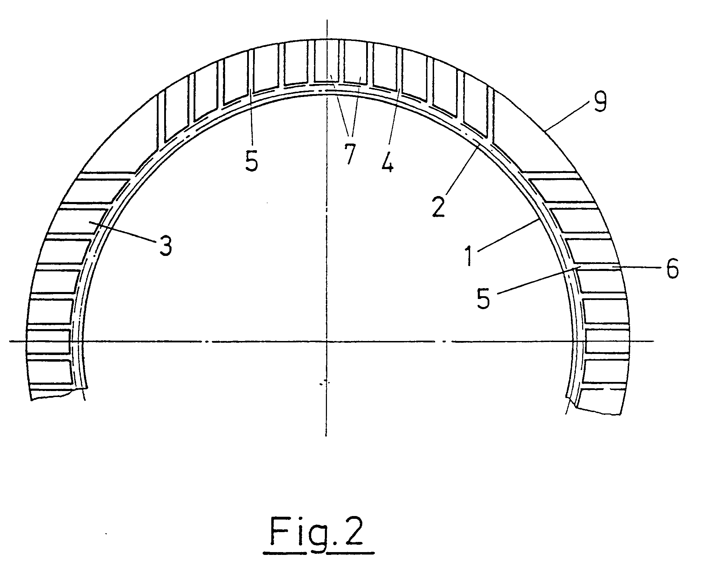

Die Ausführungsform nach der Fig. 2 unterscheidet sich von der Ausführungsform nach der Fig. 1 dadurch, daß auch die nach außen weisenden Enden 6 der Nuten 4 offen sind. Eine beidseitig offene Nut 4 ergibt bekanntermaßen eine sehr schnelle Ölabfuhr, währen eine einseitig offene Nut, wie sie in Fig. 1 dargestellt wurde, ein leichtes Öffnen des Lamellenpaketes durch die Stauwirkung des Öls ergibt. Dieses ist vorteilhaft in Bezug auf das Schleppmoment der Kupplung.

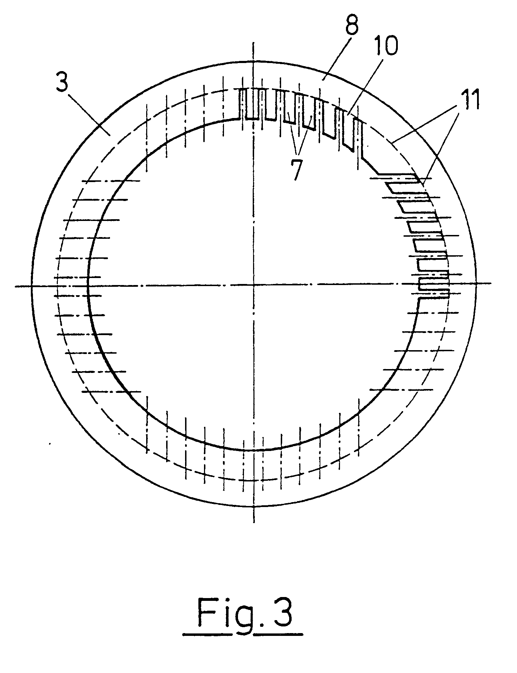

Während bei einer Ausführungsform nach Fig. 1 das Aufbringen des Reibbelags 3 auf die Trägerlamelle 1 mit üblichen Mitteln durchführbar ist, sind für das Aufbringen der einzelnen Teile 7 des Reibbelages 3 nach Fig. 2 Hilfsmittel erforderlich. Ein solches Hilfsmittel ist in der Fig. 3 gezeigt. Um die Lage der einzelnen Teile 7 des Reibbelags 3 beim Aufbringen des Reibbelags auf die Trägerlamelle 1 beizubehalten, erfolgt das Ausstanzen der Nuten 4 so, daß mindestens ein Reibbelagrand 8 beibehaltten wird. Erst nach dem Aufbringen des Reibbelags 3 auf die Trägerlamelle 1 wird dieser Reibbelagrand 8 entfernt. Besonders günstig kann diese Entfernung dann vorgenommen werden, wenn die Reibbelagränder 8 über die Ränder 9 der Trägerlamelle 1 hinausstehen. An den Stegen 7 können am Übergang 10 zu dem Reibbelagrand 8 Sollbruchstellen 11 vorgesehen sein, die ein leichtes Abbrechen des Randes 8 ermöglichen.

**Ansprüche**

1. Verfahren zur Herstellung von Reiblamellen für Kupplungen, Bremsen und andere Aggregate mit einer Trägerlamelle (1) und einem darauf aufgebrachten Reibbelag (3) aus papierartigem Material mit Nuten (4) für die Ölführung, wobei die Nuten (4) bis auf die Trägerlamelle (1) reichende Durchbrüche in dem Reibbelagmaterial sind, dadurch gekennzeichnet, daß vor dem Aufbringen des Reibbelags (3) auf die Trägerlamelle (1) die Nuten (4) aus dem Reibbelag ausgeformt werden, wobei die Nuten (4) an wenigstens einem Ende geschlossen sind, der Reibbelag (3) als zusammenhängendes Teil auf die Trägerlamelle (1) aufgebracht wird, und offene Enden der Nuten (4) durch Entfernen von diese verschließendem Reibbelagmaterial gebildet werden.

2. Verfahren nach Anspruch 1, dadurch gekennzeichnet, daß das Ausformen der Nuten (4) spanlos oder spangebend erfolgt.

3. Verfahren nach Anspruch 1 oder 2, dadurch gekennzeichnet, daß das Ausformen der Nuten (4) durch Ausstanzen erfolgt.

4. Verfahren nach einem der Ansprüche 1 bis 3, dadurch gekennzeichnet, daß das Ausformen der Nuten vor einem Imprägnieren des Reibbelage (3) mit Tränkharz erfolgt.

5. Verfahren nach einem der Ansprüche 1 bis 4, dadurch gekennzeichnet, daß die offenen Enden der Nuten (4) durch Entfernen eines über die Trägerlamelle (1) hinausstehenden Reibbelagrands (8) gebildet werden.

6. Verfahren nach einem der Ansprüche 1 bis 5, dadurch gekennzeichnet, daß durch einseitiges Entfernen eines Reibbelagrands (8) mit einem Ende offene Nuten (4) gebildet. werden.

7. Verfahren nach einem der Ansprüche 1 bis 5, dadurch gekennzeichnet, daß durch einseitiges oder beidseitiges Entfernen von Reibbelagrändern (8) mit beiden Enden offene Nuten gebildet werden.

8. Verfahren nach einem der Ansprüche 1 bis 7, dadurch gekennzeichnet, daß an den zwischen den Nuten (4) stehenbleibenden Stegen (7) des Reibbelags (3) am Übergang zu dem Reibbelagrand bzw. den Reibbelagrändern (8) Sollbruchstellen (11) ausgebildet und die Reibbelagränder (8) an den Sollbruchstellen (11) abgetrennt werden.

## Claims

1. Method for the production of friction plates for clutches, brakes and other units having a supporting plate (1) and a friction lining (3) applied thereto and consisting of paper-like material with grooves (4) for guiding the oil, the grooves (4) being openings in the friction lining material extending all the way to the supporting plate (1), characterised in that before application of the friction lining (3) onto the supporting plate (1), the grooves (4) are formed in the friction lining, the grooves (4) being closed at at least one end, the friction lining (3) being applied as a continuous member onto the supporting plate (1) and open ends of the grooves (4) being formed by removing the friction lining material closing off the latter.

2. Method according to Claim 1, characterised in that the formation of the grooves (4) takes place in a cutting or non-cutting manner.

3. Method according to Claim 1 or 2, characterised in that the formation of the grooves (4) takes place by stamping.

4. Method according to one of Claims 1 to 3, characterised in that the formation of the grooves takes place before an impregnation of the friction lining (3) with impregnating resin.

5. Method according to one of Claims 1 to 4, characterised in that the open ends of the grooves (4) are formed by removing a friction lining rim (8) protruding beyond the supporting plate (1).

6. Method according to one of Claims 1 to 5, characterised in that grooves (4) with one end open are formed by removing a friction lining rim (8) on one side.

7. Method according to one of Claims 1 to 5, characterised in that grooves open on both ends are formed by removing friction lining rims (8) on one or both sides.

8. Method according to one of Claims 1 to 7, characterised in that breaking lines (11) are formed on the bridges (7) of the friction lining (3) remaining between the grooves (4), at the transition point to the friction lining rim or the friction lining rims (8) and the friction lining rims (8) are separated at the breaking lines (11).

## Revendications

1. Procédé de fabrication de lamelles de friction pour accouplements, freins et autres ensembles, comportant une lamelle porteuse (1) et une garniture de friction (3) rapportée sur cette dernière, en matériau du genre papier, comportant des rainures (4) pour l'amenée d'huile, les rainures (4) étant, dans le matériau de la garniture de friction, traversantes jusqu'à la lamelle porteuse (1), caractérisé en ce qu'avant le dépôt de la garniture de friction (3) sur la lamelle porteuse (1), les rainures (4) sont réalisées par formage dans la garniture de friction, les rainures (4) étant fermées à au moins l'une de leurs extrémités, en ce que la garniture de friction (3) est déposée sur la lamelle porteuse (1) sous la forme d'une pièce continue, et en ce que des extrémités ouvertes des rainures (4) sont réalisées par enlèvement de matière de l'élément de friction, fermant celles-ci.

2. Procédé suivant la revendication 1, caractérisé en ce que le formage des rainures (4) se fait sans enlèvement de matière ou avec enlèvement de matière.

3. Procédé suivant la revendication 1 ou 2, caractérisé en ce que le formage des rainures (4) se fait par découpage par matrice.

4. Procédé suivant l'une des revendications 1 à 3, caractérisé en ce que le formage des rainures a lieu avant imprégnation de la garniture de friction (3) avec une résine d'imprégnation.

5. Procédé suivant l'une des revendications 1 à 4, caractérisé en ce que les extrémités ouvertes des rainures (4) sont réalisées en enlevant une bordure (8) de la garniture de friction dépassant de la lamelle porteuse (1).

6. Procédé suivant l'une des revendications 1 à 5, caractérisé en ce que des rainures (4) ouvertes à une extrémité sont réalisées en enlevant sur un côté une bordure (8) de la garniture de friction.

7. Procédé suivant l'une des revendications 1 à 5, caractérisé en ce que des rainures ouvertes aux deux extrémités sont réalisées en enlevant sur un côté ou sur les deux côtés des bordures (8) de la garniture de friction.

8. Procédé suivant l'une des revendications 1 à 7, caractérisé en ce que, sur les ailettes (7) de la garniture de friction (3) restant entre les rainures (4), des points de rupture programmée (11) sont réalises au passage vers la bordure, ou vers les bordures (8) de la garniture de friction, et en ce que les bordures (8) de la garniture de friction sont détachées aux points de rupture programmée (11).

Fig.1

Fig.2

Fig. 3